# DEMANDE DE BREVET EUROPEEN

(11) **EP 1 950 447 A1**
(43) Date de publication de la demande: **30.07.2008**
(21) Numéro de dépôt: 07300741.1
(22) Date de dépôt: 24.01.2007
(51) Int. Cl.: F16D 48/06, F16D 27/00, F16D 23/12

(54) **Système d'actionnement d'un dispositif d'embrayage**

(71) Demandeur: Delphi Technologies, Inc., Troy, MI 48007 (US)
(72) Inventeur: Lemaire, Jean-Christophe, 92110 Clichy La Garenne (FR); Loche, Jacques, 92600 Asnières (FR)
(74) Mandataire: Laget, Jean-Loup

(57) **Abrégé**

Système d'actionnement (1) d'un dispositif d'embrayage (2) d'un véhicule équipé d'une transmission manuelle, ledit système d'actionnement (1) comportant un dispositif d'entraînement (6) apte à agir sur ledit dispositif d'embrayage (2), par le biais de moyens de transmission (8, 9, 10, 11) dudit système d'actionnement, pour actionner ledit dispositif d'embrayage (2) entre une position embrayée et une position débrayée, caractérisé en ce qu'il comporte une unité de commande (15) apte à commander ledit dispositif d'entraînement (6) à partir de données relatives à la position du levier de vitesses et/ou de données relatives au régime du moteur (3) du véhicule et/ou de données relatives au couple du moteur (3) du véhicule et/ou de données relatives à la puissance du moteur (3) du véhicule et/ou de données provenant du contrôleur d'un dispositif électronique programmé de stabilité du véhicule et/ou de données relatives à la position d'une pédale d'accélération du véhicule et/ou de données relatives à la position d'une pédale d'embrayage du véhicule et/ou de données relatives à un contact sur ladite pédale d'embrayage.

## Description

La présente invention a pour objet un système d'actionnement d'un dispositif d'embrayage d'un véhicule équipé d'une transmission manuelle.

Aujourd'hui, la plupart des véhicules sont équipés d'une transmission manuelle. Les transmissions manuelles présentent l'avantage d'être économiques par rapport aux transmissions automatiques. De plus, la consommation d'un véhicule équipé d'une transmission manuelle est inférieure à la consommation d'un véhicule équipé d'une transmission automatique. Par ailleurs, l'utilisation d'une transmission manuelle correspond à un plaisir de conduite qui n'est pas apporté par les transmissions automatiques.

Dans les véhicules équipés d'une transmission manuelle, lors d'un démarrage, d'un arrêt ou d'un changement de vitesse, la transmission est débrayée par le dispositif d'embrayage en réponse à l'application d'une force relativement importante du conducteur sur la pédale d'embrayage du véhicule.

Du fait de l'importance de la force à exercer et de la longueur de la course de la pédale d'embrayage, cela devient rapidement inconfortable pour le conducteur, en particulier dans les embouteillages. De plus, un tel système nécessite un entraînement pour apprendre à utiliser la pédale d'embrayage et rend les démarrages en côte difficiles.

Le document US 5 267 635 décrit un système d'actionnement d'un dispositif d'embrayage, destiné à l'engagement et au désengagement d'un dispositif d'embrayage d'une transmission manuelle d'un véhicule. Le système d'actionnement comprend un capteur apte à détecter un mouvement de la pédale d'embrayage et un module électronique de commande apte à commander, en réponse à la réception d'une information de mouvement de la pédale transmise par le capteur, le fonctionnement d'un moteur électrique coopérant avec un élément de dégagement du dispositif d'embrayage.

Ce système d'actionnement permet ainsi d'assister le conducteur pour contrôler le dispositif d'embrayage. Cependant, ce système d'actionnement nécessite une action du conducteur sur la pédale d'embrayage. De plus, en cas de panne du système d'actionnement (capteur, moteur, etc.) ou lorsque le câble d'embrayage est cassé, le débrayage devient impossible.

La présente invention a pour but de proposer un système d'actionnement d'un dispositif d'embrayage d'un véhicule équipé d'une transmission manuelle qui évite au moins certains des inconvénients précités et qui permette une assistance efficace du conducteur pour contrôler le dispositif d'embrayage.

A cet effet, l'invention a pour objet un système d'actionnement d'un dispositif d'embrayage d'un véhicule équipé d'une transmission manuelle, ledit système d'actionnement comportant un dispositif d'entraînement apte à agir sur ledit dispositif d'embrayage, par le biais de moyens de transmission dudit système d'actionnement, pour actionner ledit dispositif d'embrayage entre une position embrayée et une position débrayée, caractérisé en ce qu'il comporte une unité de commande apte à commander ledit dispositif d'entraînement à partir de données relatives à la position du levier de vitesses et/ou de données relatives au régime du moteur du véhicule et/ou de données relatives au couple du moteur du véhicule et/ou de données relatives à la puissance du moteur du véhicule et/ou de données provenant du contrôleur d'un dispositif électronique programmé de stabilité du véhicule et/ou de données relatives à la position d'une pédale d'accélération du véhicule et/ou de données relatives à la position d'une pédale d'embrayage du véhicule et/ou de données relatives à un contact sur ladite pédale d'embrayage.

De préférence, ledit dispositif d'entraînement est un moteur électrique.

Selon un mode de réalisation de l'invention, ledit dispositif d'embrayage comporte ou est couplé à une fourchette d'embrayage apte à être entraînée en déplacement par ledit dispositif d'entraînement.

Avantageusement, lesdits moyens de transmission comprennent une vis à billes.

Selon un mode de réalisation de l'invention, ledit véhicule comporte une pédale d'embrayage couplée audit dispositif d'embrayage par le biais d'un câble d'embrayage, ledit système d'actionnement comportant des moyens de sélection permettant de sélectionner un mode de fonctionnement dudit système d'actionnement parmi un ensemble de modes de fonctionnement. Les moyens de sélection peuvent comprendre des moyens de sélection actionnables par le conducteur et/ou des moyens de sélection automatiques.

Dans ce mode de réalisation de l'invention, ledit ensemble de modes de fonctionnement comprend un premier mode de fonctionnement dans lequel ledit dispositif d'embrayage est complètement actionné par ledit dispositif d'entraînement commandé par ladite unité de commande et/ou un deuxième mode de fonctionnement dans lequel ledit dispositif d'embrayage est complètement actionné par l'action d'un conducteur sur ladite pédale d'embrayage et/ou un troisième mode de fonctionnement dans lequel ledit dispositif d'embrayage est actionné partiellement par une action du conducteur sur ladite pédale d'embrayage et partiellement par ledit dispositif d'entraînement commandé par ladite unité de commande. Dans le troisième mode de fonctionnement, le dispositif d'entraînement peut assister le conducteur pour réduire l'effort à exercer sur la pédale et/ou limiter la course de la pédale.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue schématique simplifiée en coupe longitudinale d'un système d'actionnement d'un dispositif d'embrayage selon un premier mode de réalisation de l' invention ; et
- la figure 2 est une vue similaire à la figure 1 montrant un deuxième mode de réalisation du système d' actionnement.

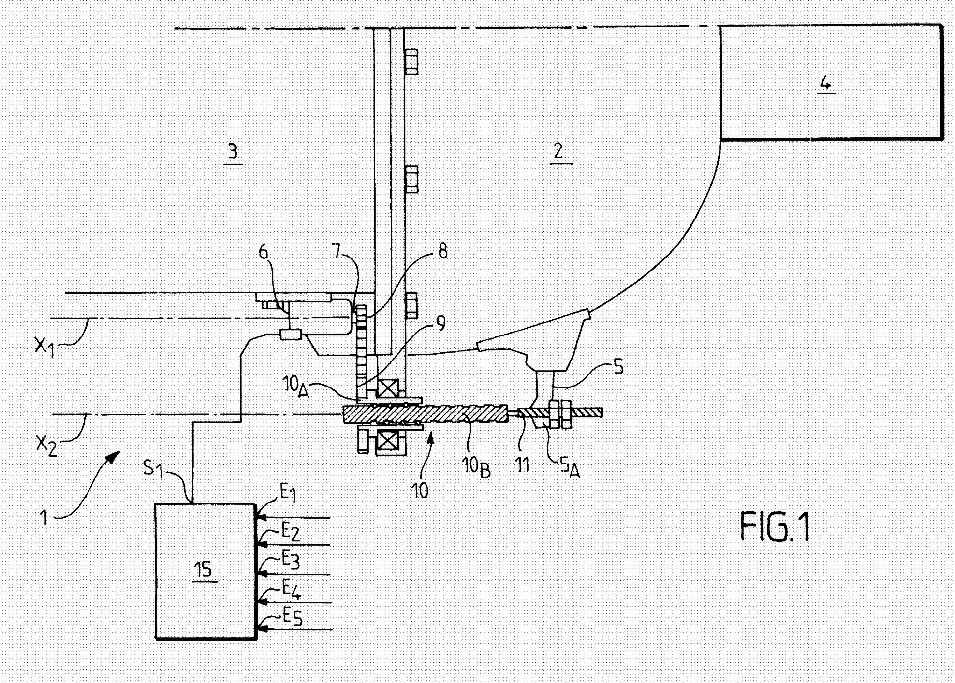

La figure 1 montre un premier mode de réalisation d'un système d'actionnement 1 d'un dispositif d'embrayage 2 (non représenté en détails) d'un véhicule équipé d'une transmission manuelle. Le dispositif d'embrayage 2 est disposé dans le véhicule entre le moteur 3 et la boîte de vitesses 4.

De manière connue en soi, le dispositif d'embrayage 2 est actionnable entre une position embrayée, dans laquelle il transmet intégralement la puissance fournie par le moteur 3, et une position débrayée, dans laquelle la transmission est interrompue, c'est-à-dire que le moteur 3 peut continuer à tourner sans entraîner les roues du véhicule.

Le dispositif d'embrayage 2 comporte ou est couplé à une fourchette d'embrayage 5, qui est mobile par rapport au dispositif d'embrayage 2 et permet d'actionner le dispositif d'embrayage 2 entre la position embrayée et la position débrayée.

Le système d'actionnement 1 comporte un dispositif d'entraînement, par exemple un moteur électrique 6 apte à entraîner son arbre moteur 7 en rotation selon un axe X₁. L'arbre 7 est couplé à un engrenage 9, via une courroie 8, de manière qu'une rotation de l'arbre 7 selon l'axe X₁ entraîne une rotation de l'engrenage 9 selon un axe X₂ sensiblement parallèle à l'axe X₁.

L'engrenage 9 engrène une première partie 10_{A} d'une vis à billes 10, dont l'axe longitudinal est l'axe X₂, de manière qu'une rotation de l'engrenage selon l'axe X₂ entraîne une rotation de la première partie 10_{A} selon l'axe X₂.

La vis à billes 10 comprend une deuxième partie 10_{B} coopérant avec la première partie 10_{A}, de manière qu'une rotation de la première partie 10_{A} selon l'axe X₂ entraîne une translation de la deuxième partie 10_{B} selon l'axe X₂, le sens de la translation étant fonction du sens de rotation de la première partie 10_{A} donc du sens de rotation de l'arbre 7.

La deuxième partie 10_{B} de la vis à billes 10 est solidaire en translation d'une tige 11 s'étendant selon l'axe X₂. La tige 11 coopère avec l'extrémité libre 5_{A} de la fourchette d'embrayage 5, de manière qu'une translation de la tige 11 selon l'axe X₂ entraîne un déplacement de la fourchette d'embrayage 5 actionnant le dispositif d'embrayage 2 vers la position embrayée ou vers la position débrayée.

Le système d'actionnement 1 comporte une unité de commande 15 comportant par exemple un microcontrôleur.

L'unité de commande 15 comporte un ensemble d'entrées Eₙ. L'ensemble d'entrées Eₙ comprend une entrée E₁ connectée à un capteur de position du levier de vitesses (non représenté) de la boîte de vitesses 4, l'entrée E₁ étant destinée à recevoir des données relatives à la position du levier de vitesse. L'ensemble d'entrées Eₙ comprend une entrée E₂ destinée à recevoir des données relatives au régime du moteur 3 (RPM). L'ensemble d'entrées Eₙ comprend une entrée E₃ destinée à recevoir des données relatives au couple du moteur 3. L'ensemble d'entrées Eₙ comprend une entrée E₄ connectée au contrôleur du dispositif électronique programmé de stabilité (ESP), l'entrée E₄ étant destinée à recevoir des données provenant de l'ESP. L'ensemble d'entrées Eₙ comprend une entrée E₅ destinée à recevoir des données relatives à la puissance du moteur 3. L'ensemble d'entrées Eₙ pourrait également comprendre une entrée (non représentée) connectée à un capteur de position de la pédale d'accélération et destinée à recevoir des données relatives à la position de la pédale d'accélération. L'ensemble d'entrées Eₙ pourrait également comprendre une ou plusieurs entrée(s) (non représentées) destinée(s) à recevoir des données relatives à la position de la pédale d'embrayage et/ou à la présence ou non d'un contact sur la pédale d'embrayage.

L'unité de commande 15 comporte une sortie S₁ connectée au moteur électrique 6. L'unité de commande 15 est apte à générer, en fonction des données reçues via les entrées Eₙ, un signal de commande du moteur 6, et à transmettre ce signal de commande au moteur 6 via la sortie S₁.

Lorsque l'unité de commande 15 commande le fonctionnement du moteur électrique 6 l'arbre 7 effectue une rotation d'axe X₁, dont le sens dépend de la commande, ce qui a pour effet d'entraîner un déplacement de la fourchette d'embrayage 5 qui actionne le dispositif d'embrayage 2 vers la position débrayée ou vers la position embrayée.

Ainsi, le système d'actionnement 1 permet d'obtenir un fonctionnement de la transmission manuelle comparable au fonctionnement d'une transmission automatique du point de vue du confort du conducteur. Par rapport à une transmission automatique, le système 1 permet d'éviter les pertes dues au convertisseur de boîte de vitesses de la transmission automatique.

En outre, l'unité de commande 15 peut être intégrée dans une unité de commande existante du véhicule, par exemple l'unité de commande du moteur 3 ou l'unité de commande du freinage. Un tel système 1 est donc économique par rapport à une transmission automatique.

On notera que, dans le premier mode de réalisation, le dispositif d'embrayage 2 est complètement contrôlé par l'algorithme exécuté par l'unité de commande 15.

Le système est particulièrement simple à installer dans le véhicule, notamment car le câble d'embrayage, reliant la pédale d'embrayage au dispositif d'embrayage 2, peut être retiré.

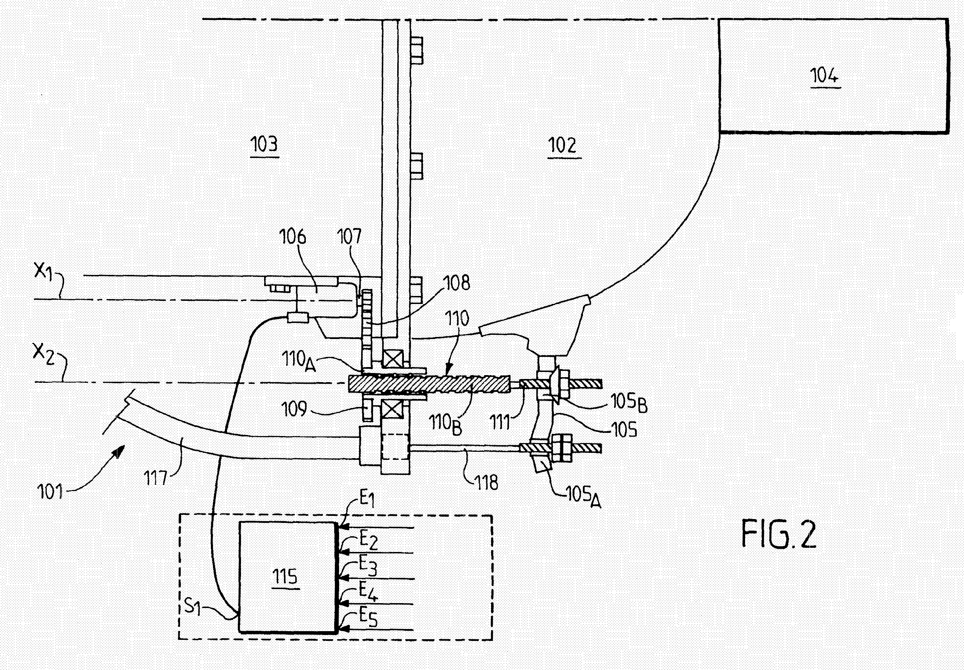

En se référant à la figure 2, on va maintenant décrire un deuxième mode de réalisation. Les éléments identiques au premier mode de réalisation sont désignés par le même chiffre de référence augmenté de 100 et ne sont pas décrits à nouveau. Ici, le véhicule comporte un câble d'embrayage 117 coopérant avec la fourchette d'embrayage 105 par le biais d'une tige 118. Par exemple, le câble 117 coopère avec l'extrémité libre 105_{A} de la fourchette d'embrayage 105 et la tige 111 coopère avec la fourchette d'embrayage 105 au niveau d'un point 105_{B} de la fourchette 105 situé entre l'extrémité libre 105 et le point de liaison de la fourchette 105 avec le dispositif d'embrayage 102.

L'autre extrémité du câble 117 (non représentée) est couplée à la pédale d'embrayage (non représentée) du véhicule. De manière connue en soi, un appui du conducteur sur la pédale d'embrayage agit sur le câble 117 en tirant, ce qui a pour effet de déplacer la fourchette 105 et la tige 118 donc d'actionner le dispositif d'embrayage 102.

Dans le deuxième mode de réalisation, le système d'actionnement 101 présente plusieurs, par exemple trois, modes de fonctionnement. Des moyens de sélection (non représentés) actionnables par le conducteur sont par exemple prévus pour permettre au conducteur de sélectionner parmi les trois modes de fonctionnement le mode de fonctionnement qu'il souhaite utiliser. Dans ce cas, l'ensemble d'entrées Eₙ comprend une entrée (non représentée) destinée à recevoir des données relatives au mode de fonctionnement sélectionné par le conducteur.

Des moyens de sélection automatiques peuvent également être prévus pour commander automatiquement le passage d'un mode de fonctionnement à un autre mode de fonctionnement.

Le premier mode de fonctionnement peut être sélectionné par le conducteur, par le biais des moyens de sélection actionnables par le conducteur, ou automatiquement, par le biais des moyens de sélection automatiques. Une sélection automatique du premier mode de fonctionnement est par exemple réalisée comme mode de fonctionnement dégradé lorsque le câble 117 est cassé.

Dans le premier mode de fonctionnement, le dispositif d'embrayage 102 est actionné électroniquement par l'unité de commande 115. Le fonctionnement est dans ce cas similaire au premier mode de réalisation.

Le premier mode de fonctionnement permet notamment de faciliter les démarrages en côte.

Le deuxième mode de fonctionnement peut être sélectionné par le conducteur, par le biais des moyens de sélection actionnables par le conducteur, ou automatiquement, par le biais des moyens de sélection automatiques. Une sélection automatique du deuxième mode de fonctionnement est par exemple réalisée comme mode de fonctionnement dégradé lorsque l'unité de commande 115 est en panne.

Dans le deuxième mode de fonctionnement, le dispositif d'embrayage 102 est actionné mécaniquement par la pédale d'embrayage. Le fonctionnement est dans ce cas similaire au fonctionnement d'une transmission manuelle classique.

Le troisième mode de fonctionnement peut être sélectionné par le conducteur, par le biais des moyens de sélection actionnables par le conducteur, ou automatiquement, par le biais des moyens de sélection automatiques. Une sélection automatique du troisième mode de fonctionnement est par exemple réalisée comme mode de fonctionnement par défaut.

Dans le troisième mode de fonctionnement, lorsque le conducteur n'appuie pas sur la pédale d'embrayage, l'unité de commande 115 commande le débrayage en fonction des données reçues à ses entrées Eₙ. Lorsque le conducteur appuie sur la pédale d'embrayage avant que l'unité de commande 115 n'ait commandé le débrayage, l'unité de commande 115 commande une assistance du débrayage. Et, lorsque le conducteur appuie sur la pédale d'embrayage pendant que l'unité de commande 115 commande le débrayage, la commande du conducteur est prioritaire et l'unité de commande 115 opère également une assistance du débrayage.

Ainsi, dans le troisième mode de fonctionnement, le dispositif d'embrayage 102 est actionné par une combinaison de l'action du conducteur sur la pédale d'embrayage et de la commande du moteur 106 par l'unité de commande 115. Dans ce mode de fonctionnement, le moteur 106 est utilisé pour diminuer l'effort à appliquer sur la pédale d'embrayage, ce qui permet d'obtenir une meilleur sensation de pédale car l'effort nécessaire est diminué et, de plus, la longueur de la course de la pédale peut être limitée. Ce mode de fonctionnement permet notamment de faciliter les démarrages en côte.

Le deuxième mode de réalisation permet ainsi de combiner le confort et les fonctionnalités d'une transmission automatique et d'une transmission manuelle.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système d'actionnement (1, 101) d'un dispositif d'embrayage (2, 102) d'un véhicule équipé d'une transmission manuelle, ledit système d'actionnement (1, 101) comportant un dispositif d'entraînement (6, 106) apte à agir sur ledit dispositif d'embrayage (2, 102), par le biais de moyens de transmission (8, 9, 10, 11, 108, 109, 110, 111) dudit système d'actionnement, pour actionner ledit dispositif d'embrayage (2, 102) entre une position embrayée et une position débrayée, **caractérisé en ce qu'**il comporte une unité de commande (15, 115) apte à commander ledit dispositif d'entraînement (6, 106) à partir de données relatives à la position du levier de vitesses et/ou de données relatives au régime du moteur (3, 103) du véhicule et/ou de données relatives au couple du moteur (3, 103) du véhicule et/ou de données relatives à la puissance du moteur (3, 103) du véhicule et/ou de données provenant du contrôleur d'un dispositif électronique programmé de stabilité du véhicule et/ou de données relatives à la position d'une pédale d'accélération du véhicule et/ou de données relatives à la position d'une pédale d'embrayage du véhicule et/ou de données relatives à un contact sur ladite pédale d'embrayage.

2. Système d'actionnement selon la revendication 1, **caractérisé en ce que** ledit dispositif d'entraînement (6, 106) est un moteur électrique.

3. Système d'actionnement selon la revendication 1 ou 2, **caractérisé en ce que** ledit dispositif d'embrayage (2, 102) comporte ou est couplé à une fourchette d'embrayage (5, 105) apte à être entraînée en déplacement par ledit dispositif d'entraînement (6, 106).

4. Système d'actionnement selon l'une quelconque des revendications 1 à 3, **caractérisé en ce que** lesdits moyens de transmission comprennent une vis à billes (10, 110).

5. Système d'actionnement selon la revendication 1, **caractérisé en ce que** ledit véhicule comporte une pédale d'embrayage couplée audit dispositif d'embrayage (102) par le biais d'un câble d'embrayage (117), ledit système d'actionnement (101) comportant des moyens de sélection permettant de sélectionner un mode de fonctionnement dudit système d'actionnement parmi un ensemble de modes de fonctionnement.

6. Système d'actionnement selon la revendication 5, **caractérisé en ce que** ledit ensemble de modes de fonctionnement comprend un premier mode de fonctionnement dans lequel ledit dispositif d'embrayage (102) est complètement actionné par ledit dispositif d'entraînement (106) commandé par ladite unité de commande (115).

7. Système d'actionnement selon la revendication 5 ou 6, **caractérisé en ce que** ledit ensemble de modes de fonctionnement comprend un deuxième mode de fonctionnement dans lequel ledit dispositif d'embrayage (102) est complètement actionné par l'action d'un conducteur sur ladite pédale d'embrayage.

8. Système d'actionnement selon l'une quelconque des revendications 5 à 7, **caractérisé en ce que** ledit ensemble de modes de fonctionnement comprend un troisième mode de fonctionnement dans lequel ledit dispositif d'embrayage (102) est actionné partiellement par une action du conducteur sur ladite pédale d'embrayage et partiellement par ledit dispositif d'entraînement (106) commandé par ladite unité de commande (115).
